# EUROPÄISCHE PATENTANMELDUNG

(11) **EP 1 367 315 A2**
(43) Veröffentlichungstag der Anmeldung: **03.12.2003**
(21) Anmeldenummer: 03011848.3
(22) Anmeldetag: 26.05.2003
(51) Int. Cl.: F17B 1/00

(54) **Gasbehälter**

(30) Priorität: 29.05.2002 DE 20208178 U
(71) Anmelder: Kassen, Dirk, 49124 Georgsmarienhütte (DE); Reinelt, Markus, 49124 Georgsmarienhütte (DE)
(72) Erfinder: Kassen, Dirk, 49124 Georgsmarienhütte (DE); Reinelt, Markus, 49124 Georgsmarienhütte (DE)
(74) Vertreter: Bünemann, Egon

(57) **Zusammenfassung**

Gasbehälter (1) mit einem mit zumindest einer flexiblen Wandung (5) versehenen, größenvariablen Aufnahmeraum (2) für Gas im Sinne einer einfachen und zuverlässigen Konstruktion in der Weise ausgestaltet, daß der flexiblen Wandung (5) mehrere Ausdehnungsbegrenzer (8) zugeordnet sind, die mit der Wandung (5) beweglich sind und deren Formgebung zwangsbeeinflussen.

## Beschreibung

Die Erfindung betrifft einen Gasbehälter nach dem Oberbegriff des Anspruchs 1.

Im Stand der Technik sind gattungsgemäße Gasbehälter beispielsweise als Stülpmantelgasspeicher, MAN?Scheibengasbehälter oder als Wiggins-Speicher bekannt. Beim Stülpmantelgasbehälter wird ein Stahlmantel, der den Behälter umlaufend umgibt, innenseitig mit einer der rundzylindrischen Umrißgestalt des Mantels folgenden Membran versehen, die nach Art eines Kegelstumpfs etwa auf halber Höhe des Stahlmantels angeordnet ist und sich bei leerem Behälter von dort aus nach unten erstreckt. Im Bodenbereich mündet die Membran in einen scheibenförmigen, in sich starren Kolben, der durch Gaseinlaß angehoben werden kann, wobei durch die Nachgiebigkeit der Membran die Kolbenbewegung ermöglicht wird. Mit zunehmendem Gasinhalt des Behälters wandert der Kolben weiter nach oben. Entsprechend stülpt sich die zunächst abwärts weisende Membran ebenfalls nach oben. Es ergibt sich zudem ein großes Totvolumen, ehe überhaupt eine Bewegung des Kolbens einsetzt. Zudem wirken auf einen Kolben mit großem Durchmesser während des Anfahrprozesses erhebliche Biegespannungen.

Beim MAN-Scheibengasbehälter erfolgt die Abdichtung des vertikal geführten Kolbens gegen den vertikal umlaufenden gasdichten Mantel mittels einer aufwendigen Abdichtung aus Andrückelementen und einer darüber angeordneten Öldichtung, die zu ständigem Ölverlust führt.

Bei den zuvor genannten Gasbehältertypen ist der Fertigungsaufwand hoch, da jeweils eine starre zylindrische Mantelwandung als Teil des Gasraumes benötigt wird.

Auch ist es bekannt, sogenannte Kissenspeicher zu verwenden, bei denen ein insgesamt flexibles Kissen mit Gas befüllt wird. Zur Druckerhöhung werden die Kissen von oben durch Gewichte belastet. Es kann zur Dehnungsbegrenzung vorgesehen sein, daß das Kissen gegen eine äußere Begrenzung anläuft, wenn es mit Gas befüllt wird. Derartige Speicher haben jedoch nur ein zumeist geringes Aufnahmevolumen. Je mehr Gasdruck im Behälter herrscht, desto größer wird die Gefahr der Überdehnung der Hülle. Diese ist somit einer erheblichen mechanischen Beanspruchung ausgesetzt. Zudem ergibt sich eine ungenaue Führung, ebenso auch bei Scheibengasbehältern, bei denen der Kolben nicht separat geführt ist. Dieses kann dort zu einer torkelnden Kolbenbewegung bei der Hubbewegung, im Extremfall sogar zum Absturz des Kolbens führen.

Der Erfindung liegt das Problem zugrunde, einen konstruktiv einfachen und im Betrieb zuverlässigen Gasbehälter zu schaffen.

Die Erfindung löst dieses Problem durch einen Gasbehälter mit den Merkmalen des Anspruchs 1. Vorteilhafte Ausgestaltungen ergeben sich aus den abhängigen Ansprüchen 2 bis 10.

Dadurch, daß die Ausdehnungsbegrenzer mit der Wandung beweglich sind und diese nicht gegen die Ausdehnungsbegrenzer anlaufen muß, ist in jeder Phase der Bewegung eine definierte Form der Wandung sichergestellt. Die mechanische Belastung ist verringert. Eine Außenhülle, die eine Begrenzung für die flexible Wandung bilden müßte, ist entbehrlich. Dadurch ist der Bauaufwand erheblich verringert. Insbesondere ist eine äußere Stahlwandung, die aufwendig beschichtet werden müßte, nicht erforderlich.

Besonders vorteilhaft ist der Gasaufnahmeraum als Rundzylinder ausgebildet, so daß die Ausdehungsbegrenzer als außen auf der Wandung gehaltene, parallel horizontal liegende Ringe ausgebildet sein können, die aufgrund ihrer geschlossenen Form eine hohe Stabilität aufweisen. Gegenüber einem eckigen Querschnitt ist die Bildung von Kantenbereichen vermieden.

Wenn in entleerter Stellung zwischen den Ausdehnungsbegrenzern Wandungsbereiche jeweils nach außen gefaltet liegen, ergibt sich eine definierte Formgebung auch im entleerten Zustand des Gasaufnahmeraums. Knicken und Faltungsbrüchen der flexiblen Wandung wird somit vorgebeugt.

Als Führungshilfe und zur Stabilisation können Vertikalstützen oder dergleichen vorgesehen sein, die mit einem horizontalen Kolben in Verbindung stehen. Damit ist dann ein Verkanten, Verdrehen oder Torkeln des Kolbens verhindert.

Weitere Vorteile und Einzelheiten der Erfindung ergeben sich aus einem nachfolgend beschriebenen und in der Zeichnung dargestellten Ausführungsbeispiel des Gegenstandes der Erfindung.

In der Zeichnung zeigt:
- Fig. 1: einen erfindungsgemäßen Gasbehälter im vollständig befüllten Zustand,
- Fig. 2: den Behälter nach Fig. 1 im teilweise befüllten Zustand,
- Fig. 3: den Behälter nach Fig. 1 in außerhalb eines Totvolumens vollständig entleertem Zustand,

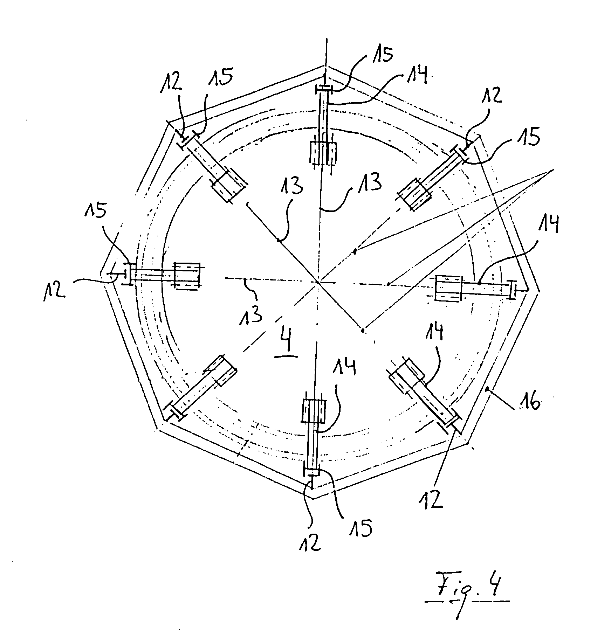

- Fig. 4: eine Draufsicht auf den Behälter nach Fig. 1.

Der Gasbehälter 1 umfaßt zumindest einen Gasbefüllraum 2, der über eine Zuleitung 3 mit Gas beaufschlagbar ist. Der Gasbefüllraum 2 ist oberseitig durch einen horizontalen Kolben (auch als Scheibe bezeichnet) 4 abgedeckt, an den sich seitlich den Kolben 4 vollständig dicht umgrenzende flexible Wandungen 5 anschließen. Im Ausführungsbeispiel hat der Kolben 4 eine runde Umrißgestalt, so daß der Gasbefüllraum 2 eine insgesamt rundzylindrische Form einnimmt. Dies ist nicht zwingend. Auch andere Kolbenformen und somit auch Formen eines Gasbefüllraums sind möglich. Es ist auch möglich, die flexible Wandung 5 ober- und unterseitig zu einem geschlossenen, flexiblen Körper zu schließen.

Im unteren Bereich ist der Befüllraum 2 von einem Boden, beispielsweise aus Beton, abgeschlossen. Dieser ist im Außenbereich an Verbindungsstellen 7 dicht mit den Seitenwandungen 5 verbunden.

Die Seitenwandungen 5 sind flexibel und bestehen beispielsweise aus Neopren, Kautschuk, PVC oder anderen bekannten flexiblen Kunststoffen, die elastisch verformbar sind. Die Stärke der Wandung 5 liegt typisch im Bereich weniger Millimeter.

Der Wandung 5 sind Ausdehnungsbegrenzer 8 zugeordnet, die bei der hier gezeigten rundzylindrischen Form des Aufnahmeraums 2 als geschlossene Ringe ausgebildet sind. Die Ausdehnungsbegrenzer 8 können beispielsweise aus Stahl gebildet sein und liegen im Ausführungsbeispiel horizontal übereinander, wobei der Abstand zwischen einzelnen Ringen 8 im befüllten Zustand des Behälters jeweils gleich ist. Statt der gezeigten äußeren Ringe 8 als Ausdehnungsbegrenzer können diese auch innerhalb der flexiblen Wandung 5 liegen und dort etwa als verstärkende Fasern oder dergleichen ausgebildet sein.

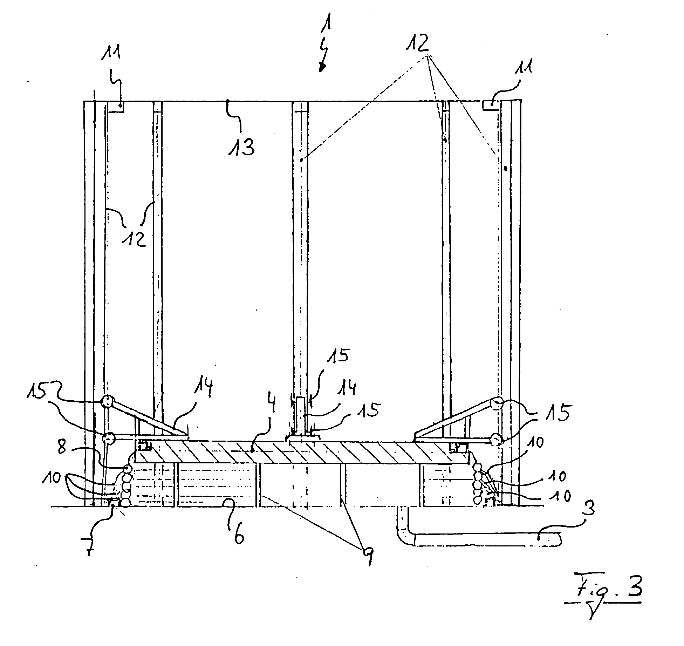

Der Kolben 4 ist unterseitig mit vertikal nach unten ragenden Abstandhaltern 9 versehen, die im entleerten Zustand des Füllraums 2 (Fig. 3) auf dem Boden 6 aufstehen und einen Mindestabstand des Kolbens 4 zu diesem sicherstellen. Bei völliger Entleerung ist eine parallele Übereinanderlage der Ringe 8 erreicht, wobei sich zwischen den Ringen 8 jeweils definierte Falten 10 der flexiblen Wandung 5 nach außen auswölben können. Diese Auswölbung ist definiert und ohne scharfe Knicke oder Kanten. Dadurch, daß durch die Abstandhalter 9 der Weg des Kolbens 4 nach unten begrenzt ist, drückt dieser nicht mit seiner Gewichtskraft auf die Ringe 8 und die dazwischenliegenden Falten 10, sondern stützt sich gegenüber dem Boden 6 ab. Somit haben die von der Wandung 5 gebildeten Falten 10 lediglich ihr Eigengewicht und das der relativ leichten Ringe 8 zu tragen, so daß sie nicht gestaucht werden.

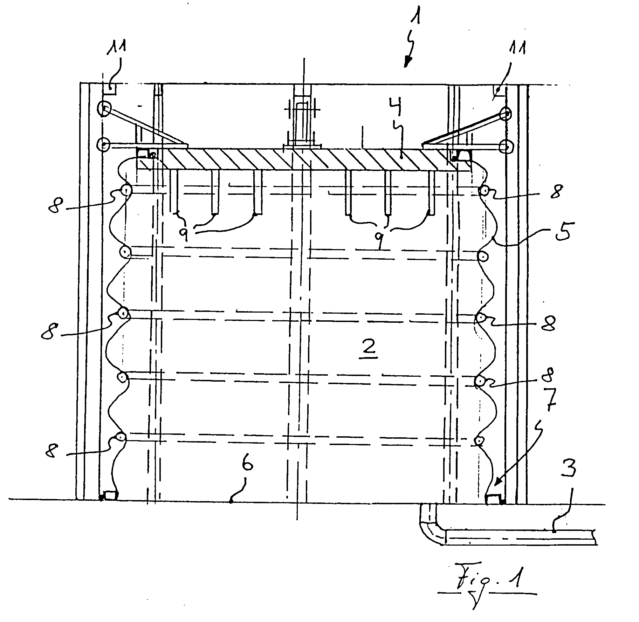

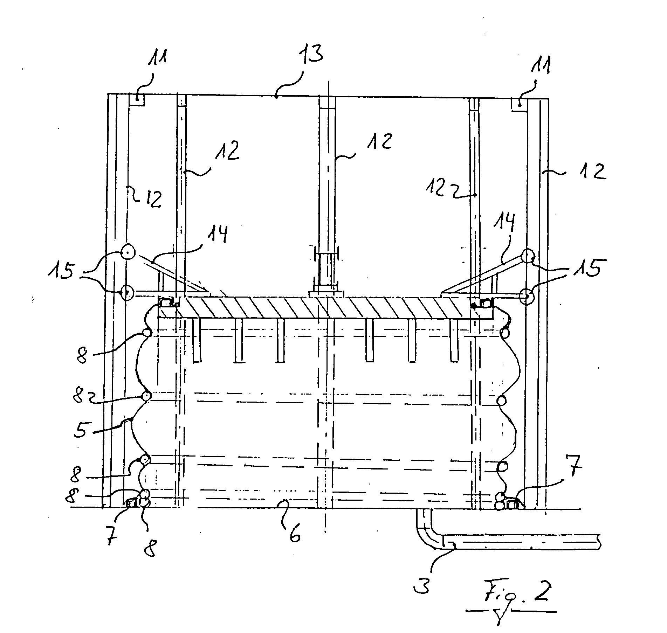

Beim Befüllen des Aufnahmeraums 2 (Fig. 2) heben sich zuerst die oberen Ringe 8, zwischen denen dann in freien Bereichen die Wandung 5 nach außen auswölben kann. Durch weitere Befüllung wird der Kolben 4 in seine in Fig. 1 gezeigte Endstellung angehoben, wobei die maximale Höhe durch Ausschubbegrenzer 11 vorgegeben ist.

Die Führung des Kolbens und damit die Aus- und Einfahrbewegung der flexiblen Wandung 5 ist weiterhin verbessert, wenn der Kolben 4 über Gestelle 14, die mit diesem fest verbunden sind, an seitlichen Vertikalstützen 12 auf und ab verfahrbar ist. Hierfür können beispielsweise Rollen 15 an den Gestellen 14 vorgesehen sein, die an den Stützen 12 verfahrbar sind. Dabei genügt es, einzelne Vertikalstützen 12 zu haben. Eine umlaufende Wandung ist nicht erforderlich. Erst recht ist keine Gasdichtigkeit erforderlich, da lediglich der Raum innerhalb der Membran 5 mit Gas befüllt ist. Die Baukosten sind somit erheblich verringert. Die Stützen 12 können als Stahl- oder Leichtbauteile ausgeführt und beispielsweise über Abspannseile 13 stabilisierend miteinander verbunden sein. Eine tragende Funktion kommt ihnen nicht zu, sondern sie erledigen reine Führungsaufgaben. Zwischen den einzelnen Stützen 12 kann eine Verkleidung 16 vorgesehen sein, die beispielsweise auch aus Kunststoffelementen oder anderen Leichtbaumaterialien bestehen kann. Der Bauaufwand für eine derartige Verkleidung 16 ist in jedem Fall erheblich geringer als der für einen bisher erforderlichen Außenmantel, der eine Gasdichtigkeit aufweisen mußte. Zusätzlich zur Führung des Kolbens 4 können auch die Ausdehnungsbegrenzer 8 geführt sein.

Insgesamt ergibt sich somit eine baulich sehr einfache Lösung, die typischerweise für Niederdruckgasspeicher mit einem Betriebsdruck von etwa 3 bis 80 mbar Verwendung finden kann. Als eingeleitete Gase kommen beispielsweise Klärgas, Wasserstoff, Faulgase aus Biogasreaktoren oder dergleichen in Betracht. Der Rauminhalt eines derartigen Gasbehälters kann durchaus 100.000 m³ betragen. Die Speicherkapazität ist gegenüber bisherigen Gasbehältern auch dadurch erhöht, daß unterhalb des Kolbens 4 in entleerter Stellung des Gasbehälters 1 hier nur ein sehr geringes Totvolumen vorhanden ist. Der Kolben 4 ist zuverlässig geführt. Ein hoher Betriebsdruck ist dadurch möglich, daß die Membran 5 durch die Ringe 8 gehalten ist und die Dehnung stark begrenzt wird. Gegenüber einer in ihrer Dehnung nicht von außen begrenzten Stülpmembran ist daher die Lebensdauer der Wandung 5 hier erheblich erhöht.

Die Membran 5 kann insgesamt nach oben herausgezogen werden, ohne den Kolben zu entfernen. Ein Schließen eines Bereiches oberhalb des Kolbens 4 ist nicht erforderlich, insofern sind auch Montage und Demontage der flexiblen Wandung erleichtert, und ein kostenintensives Dach kann entfallen. Etwa aufkommendes Regenwasser kann beispielsweise über den Kolben 4 selbst auf die Außenseite der Wandung 5 geleitet oder durch eine spezielle Entwässerungsvorrichtung durch den Gasraum oder mittels einer Pumpe vom Kolben entfernt werden.

Wenn die Ausdehnungsbegrenzer 8 einen größeren Durchmesser als der Kolben 4 haben, kann die Membran 5 insgesamt nach oben demontiert werden, ohne den Kolben zu bewegen. Dies vereinfacht die Wartung.

Prinzipielle Einschränkungen hinsichtlich der Wandhöhe oder des Durchmessers ergeben sich nicht.

## Patentansprüche

1. Gasbehälter (1) mit einem mit zumindest einer flexiblen Wandung (5) versehenen, größenvariablen Aufnahmeraum (2) für Gas, **dadurch gekennzeichnet, daß** der flexiblen Wandung (5) mehrere Ausdehnungsbegrenzer (8) zugeordnet sind, die mit der Wandung (5) beweglich sind und deren Formgebung zwangsbeeinflussen.

2. Gasbehälter nach Anspruch 1, **dadurch gekennzeichnet, daß** die Ausdehnungsbegrenzer (8) parallel zueinander angeordnet sind und zwischen den Ausdehnungsbegrenzern die Wandung (5) jeweils nach außen frei dehnbar ist.

3. Gasbehälter nach einem der Ansprüche 1 oder 2, **dadurch gekennzeichnet, daß** die flexible Wandung (5) eine zylindrische Hülse des Gasaufnahmeraums (2) bildet und die Ausdehungsbegrenzer (8) übereinander angeordnet sind.

4. Gasbehälter nach Anspruch 3, **dadurch gekennzeichnet, daß** die zylindrische Hülse eine rundzylindrische Hülse ist und die Ausdehnungsbegrenzer (8) als Ringkörper ausgebildet sind.

5. Gasbehälter nach einem der Ansprüche 3 oder 4, **dadurch gekennzeichnet, daß** die Ausdehnungsbegrenzer (8) parallel übereinander liegen und in entleerter Stellung des Gasaufnahmeraums (2) jeweils ein Teil eines Wandungsbereichs (5) als nach außen liegende Falte (10) zwischen den Ausdehnungsbegrenzern (8) liegt.

6. Gasbehälter nach einem der Ansprüche 1 bis 5, **dadurch gekennzeichnet, daß** der Gasaufnahmeraum (2) nach oben hin durch einen mit den flexiblen Wandungsbereichen (5) dicht verbundenen Kolben (4) begrenzt ist.

7. Gasbehälter nach einem der Ansprüche 1 bis 6, **dadurch gekennzeichnet, daß** die flexiblen Wandungsbereiche (5) nach oben hin aus dem Gasbehälter (1) demontierbar sind, ohne den Kolben (4) entfernen zu müssen.

8. Gasbehälter nach einem der Ansprüche 1 bis 7, **dadurch gekennzeichnet, daß** der Gasraum von einem allseitig geschlossenen Sack (5) mit zylindrischer Wandung mit Ausdehnungsbegrenzern (8) besteht, auf dem der Kolben (4) aufliegt.

9. Gasbehälter nach einem der Ansprüche 1 bis 8, **dadurch gekennzeichnet, daß** die Ausdehnungsbegrenzer (8) im Durchmesser größer sind als der Kolben (4).

10. Gasbehälter nach einem der Ansprüche 1 bis 9, **dadurch gekennzeichnet, daß** die Ausdehnungsbegrenzer (8) in der Hubrichtung geführt werden.
